# EUROPÄISCHE PATENTSCHRIFT

(11) **EP 2 363 235 B1**
(45) Veröffentlichungstag und Bekanntmachung des Hinweises auf die Patenterteilung: **16.04.2014**
(21) Anmeldenummer: 11001622.7
(22) Anmeldetag: 28.02.2011
(51) Int. Cl.: B23Q 1/00, B23Q 3/06

(54) **Bearbeitungsmaschine**
Machining unit
Machine de traitement

(30) Priorität: 02.03.2010 DE 102010009947; 08.09.2010 DE 102010044783
(43) Veröffentlichungstag der Anmeldung: 07.09.2011
(73) Patentinhaber: Grob-Werke GmbH & Co. KG, 87712 Mindelheim (DE)
(72) Erfinder: Grob, Burkhart, 86825 Bad Wörishofen (DE)
(74) Vertreter: Schulz, Manfred

(56) Entgegenhaltungen:
- EP-A1- 2 210 699
- WO-A1-2006/003683
- US-A1- 2007 057 135

## Beschreibung

Die Erfindung betrifft eine Bearbeitungsmaschine für das Bearbeiten eines oder mehrerer Werkstücke, wobei das Werkstück in der Bearbeitungsmaschine auf oder in einem nicht drehbaren oder, insbesondere um mindestens eine Achse drehbaren Werkstücktisch mittelbar oder unmittelbar durch eine Spannvorrichtung gehalten ist.

Des Weiteren umfasst die Erfindung auch eine Bearbeitungsmaschine für das Bearbeiten eines oder mehreren Werkstücke mit einem nicht drehenden oder, insbesondere durch eine Werkzeugspindel rotatorisch angetriebenen Bearbeitungswerkzeug, wobei das Bearbeitungswerkzeug in einer Werkzeugaufnahme mittelbar oder unmittelbar durch eine Werkzeugspannvorrichtung gehalten ist. Eine solche Bearbeitungsmaschine ist z.B. aus dem Patentdokument WO 2006/003683 bekannt.

Die gattungsgemäßen Bearbeitungsmaschinen sind zum Beispiel Teil von komplexeren, insbesondere spanabhebenden Bearbeitungslinien oder auch in bevorzugt flexibel einsetzbaren Bearbeitungszentren realisiert. Die gattungsgemäßen Bearbeitungsmaschinen weisen in der Regel eine hohe Rotationsgeschwindigkeit der spannabhebenden Bearbeitungswerkzeuge auf. Auch die sonstigen bei der Bearbeitung auftretenden Kräfte sind durchaus beachtlich, weswegen für eine exakte Bearbeitung des Werkstückes eine sichere, lagegenaue Fixierung des aufzuspannenden Werkstückes notwendig ist. Die Fixierung erfolgt dabei durch die Spannvorrichtung, die die erheblichen Arbeitskräfte sicher abzuleiten hat.

Dabei ist es bekannt, das Werkstück entweder mittelbar oder unmittelbar am Werkstücktisch oder an Elemente des Werkstücktisches zu befestigen, wofür eine Spannvorrichtung dient. Bei einer unmittelbaren Befestigung des Werkstückes wirkt dabei die Spannvorrichtung unmittelbar auf das Werkstück ein, bei einer mittelbaren Befestigung ist das Werkstück zum Beispiel auf einem Werkstückträger oder einer Palette aufgespannt und die Spannvorrichtung wirkt mit dem Werkstückträger oder der Palette in geeigneter Weise zusammen. Von einer Spannvorrichtung für das Werkstück wird daher zum Einen eine möglichst hohe Positionsgenauigkeit, zum Anderen eine hohe Stabilität, also eine hohe Spannkraft erwartet, um eine möglichst ausschussfreie und hochgenaue Bearbeitung sicherzustellen.

Das gleiche Anforderungsprofil wird aber auch an ein für die Werkzeugaufnahme der Bearbeitungsmaschine eingespannten Bearbeitungswerkzeug gestellt.

Im Stand der Technik ist es bekannt, sowohl das zu bearbeitende Werkstück (mittelbar oder unmittelbar), wie auch das der Bearbeitung dienende Bearbeitungswerkzeug (mittelbar oder unmittelbar) durch hydraulische Mittel zu halten beziehungsweise zu spannen.

Hydraulische Spannmittel haben den Vorteil, dass mit Ihnen auf verhältnismäßig kleinem Raum hohe Kräfte entfaltet werden können.

Nachteilig allerdings ist, dass das Verlegen der Hydraulikleitungen, die entsprechend hohem Druck (mehrere 100 bar) standhalten müssen, aufwendig ist. Die Hydraulikleitungen sind aufgrund der hohen Belastung auch entsprechend wartungsanfällig. Der Werkstücktisch ist für Bearbeitungszwecke im Raum entlang mindestens einer Raumachse, in der Regel entlang mehrerer Raumachsen, positionierbar. Die Hydraulikleitung muss daher ausreichend flexibel ausgebildet sein, um diesen Bewegungen im Raum folgen zu können. Oftmals ist der Werkstücktisch aber.auch im Raum drehbar und auch in diesen verschwenkten Stellungen ist eine zuverlässige Hydraulikzuführung zu gewährleisten, was bei den genannten verdrehbaren Elementen nur mit erheblichem Aufwand sowohl bei der Konstruktion wie auch bei der Wartung zu erreichen ist.

Alternativ ist der Einsatz von pneumatischen Werkstückspannungen bekannt, bei welchen aber keine so hohen Haltekräfte erreicht werden können.

Dabei besteht auch das Problem, dass die Positionsabfragen, zum Beispiel Werkstück gespannt oder Bearbeitungswerkzeug gespannt, nur indirekt über den Druck oder über andere sonstige aufwendige Einrichtungen abgefragt werden können.

Schlussendlich ist auch der gerätetechnische Aufwand für das Verlegen einer Hydraulikanordnung beachtlich, da neben einer Verrohrung und dem Verlegen von Anschlussschläuchen bzw. flexiblen Rohren auch ein entsprechendes Pumpaggregat sowie Ventile und Ansteuerung der Ventile notwendig sind.

Ausgehend von diesem Stand der Technik ist es Aufgabe der Erfindung, eine Verbesserung für das Spannen von einem oder mehreren Werkstück/en bei Bearbeitungsmaschinen, insbesondere von spanabhebenden Bearbeitungsmaschinen, vorzuschlagen.

Zur Lösung dieser Aufgabe wird ausgegangen von einer Bearbeitungsmaschine wie eingangs beschrieben und vorgeschlagen, dass an dem Werkstücktisch ein Elektromotor vorgesehen ist, dessen erzeugte Kraft, Drehmoment und/oder Drehimpuls mittelbar oder unmittelbar auf das Werkstück wirkt. Anstelle eines Hydraulik-oder Pneumatikantriebes wird nun ein Elektromotor eingesetzt, der die Spannvorrichtung betätigt beziehungsweise der Elektromotor wirkt mit einem Spannelement der Spannvorrichtung zusammen. Der Pfiff ist aber nicht nur auf das Spannen eines Werkstückes beschränkt, sondern kann in gleicher Weise auch für eine Werkzeugspannvorrichtung eingesetzt werden. Dabei umfasst die Werkzeugspannvorrichtung mindestens ein Werkzeugspannelement, welches mit dem Bearbeitungswerkzeug mittelbar oder unmittelbar zusammenwirkt und ein Elektromotor für das Erzeugen der Spannkraft vorgesehen ist,
als geberloser und Permanentmagnet erregter Synchronmotor ausgebildeter der in Wirkverbindung mit dem Werkzeugspannelement steht.

Der Vorschlag erlaubt es bei Bedarf, die gesamte Hydraulik aus einer Bearbeitungsmaschine zu verbannen. Insbesondere ermöglicht der Vorschlag, dass sehr viel einfacher zu handhabende elektrische Leitungen verwendbar sind, die in den ebenfalls längsbeweglichen oder rotatorisch ausgelegten Werkzeugtisch zu führen sind, was durch entsprechende Medienleitungen, Kabelschleppvorrichtung und so weiter, sehr viel einfacher realisierbar ist.

Grundsätzlich eröffnet die vorgeschlagene Bearbeitungsmaschine aber nach wie vor die Möglichkeit in speziellen Anwendungsfällen trotzdem ein hydraulisches Spannen des Werkstückes (mittelbar oder unmittelbar) oder des Bearbeitungswerkzeuges (mittelbar oder unmittelbar) zu realisieren. Anstatt ein zentrales Hydraulikaggregat vorzusehen, wird dezentral, zum Beispiel in der Werkzeugaufnahme oder am Werkstücktisch bzw. dem oder den Spannelementen, von dem Elektromotor eine entsprechende Hydraulikpumpe betrieben, die ihrerseits dann in geeigneter Weise das Hydraulikmedium mit dem entsprechenden Druckniveau den hydraulisch wirkenden Spannelementen zur Verfügung stellt.

Es ist ein erheblicher Vorteil der vorgeschlagenen Bearbeitungsmaschine, sowie sämtlicher vorteilhafter Weiterbildungen und Kombination von Ausführungsformen davon, dass diese in diesem Bereich sehr flexibel einsetzbar ist und mit dem Elektromotor eine universale Kraftquelle zur Verfügung steht, die über bekannte mechanische Bauteile, wie Getriebe, Ketten, Ritzelanordnung, Zahnräder, Winkelgetriebe und so weiter, Kraft und Drehmoment an die jeweils benötigten Orte zu leiten vermag. Es ist aber auch möglich mit Hilfe des Elektromotors zum Beispiel eine Hydraulik- oder Pneumatikpumpe oder andere Elemente anzutreiben und diese Kraft- beziehungsweise Energiereservoirs dann in geeigneter Weise in der Bearbeitungsmaschine zu nutzen.

Überraschenderweise eröffnet das Konzept nicht nur eine erhebliche Verbesserung der Spannvorrichtung, sondern weitet erheblich den Einsatzbereich einer Bearbeitungsmaschine aus. Mit Hilfe des Vorschlags wird der Spannvorgang erheblich verbessert. So wird vorgeschlagen, dass die Spannvorrichtung neben oder alternativ zu den sonstigen hier genannten vorteilhaften Weiterbildungen oder Merkmalen beziehungsweise Merkmalskombinationen davon, mindestens ein Spannelement umfasst, welches mit dem Werkstück mittelbar oder unmittelbar zusammenwirkt und ein Elektromotor für die Erzeugung der Spannkraft vorgesehen ist, der in Wirkverbindung mit dem Spannelement steht. Der Einsatz des Elektromotors im Werkstücktisch erlaubt aber auch eine dauerhafte Rotation des Werkstückes. So ist mit geringem Aufwand eine Umrüstung der Bearbeitungsmaschine durchzuführen und der Elektromotor dient dann an dem Werkstücktisch als Rotationsantrieb für das Werkstück, um zum Beispiel rotatorische Schleif- oder Drehbearbeitung am Werkstück vorzusehen. Hierfür wird dann das Bearbeitungswerkzeug zum Beispiel in einer ansonsten in Rotation versetzten Werkzeugspindel feststehend eingespannt und wie bei einer Drehbank gegen das Werkstück angestellt.

Es ergeben sich folgende Vorteil einer solchen nachfolgend auch als mechatronischen Spannvorrichtung beschriebenen Anordnung.

Eine derart ausgestattete Maschine beziehungsweise deren vorteilhafte Weiterbildungen besitzt/besitzen grundsätzlich eine höhere Verfügbarkeit, da sie nicht nur für klassische Bohr-oder Fräsbearbeitungen einsetzbar ist/sind, sondern nunmehr auch Drehbearbeitungen möglich sind.

Es besteht eine schnelle Inbetriebnahme der Spannvorrichtung in Verbindung mit einer Beladeeinrichtung.

Die bei den Lösungen nach dem Stand der Technik bekannten Drehverbindungen oder Drehverteilungen für die hydraulischen oder pneumatischen Leitungen werden durch den Vorschlag vollständig vermieden. Es besteht kein Verschleiß von bewegten Dichtungen, das Drehen und Positionieren des Werkstücktisches ist mit geringeren Kräften einfacher möglich.

Grundsätzlich erlaubt die Bearbeitungsmaschine beziehungsweise vorteilhafte Weiterbildungen und Ausführungsformen beziehungsweise Kombinationen von Ausführungsformen, eine schnelle Umrüstbarkeit der Maschine auf andere Werkstücke und auch andere Bearbeitungsprozesse.

Durch die vorgeschlagene Bearbeitungsmaschine sowie deren in den beigefügten Ansprüchen definierte vorteilhafte Weiterbildungen oder bevorzugte Ausführungsformen beziehungsweise Kombinationen von Ausführungsformen ist es möglich, eine Spannkraftkontrolle über den von dem Elektromotor aufgenommenen Motorstrom zu realisieren.

Es werden Leckagen im Hydrauliksystem vermieden, auch der Wartungsaufwand für das Nachziehen der Hydraulikverschraubung und so weiter entfällt. Da auch keine sonstigen Hydraulikschläuche mehr verbaut werden, müssen die Hydraulikschläuche auch nicht in regelmäßigen Austauschintervallen gewechselt werden. Es entfällt auch der verhältnismäßige hohe Aufwand für Tieflochbohrungen in der Grundplatte der Vorrichtung, die zur Aufnahme der Hydraulikleitungen vorgesehen waren.

Da im Werkstücktisch ein bevorzugt rotatorisch wirkender Spannantrieb zur Verfügung steht, können die verschiedensten Spannvorrichtungen eingesetzt werden. Es ist zum Beispiel möglich, einzelne Spannelemente anzuordnen oder aber die Spannvorrichtung als Schraubstock oder Drei- oder Mehrbackenfutter zu realisieren. Auch der Einsatz einer Aufsatzspindel oder Ähnlichem ist möglich.

Die vorgeschlagene Bearbeitungsmaschine verbessert die Umweltverträglichkeit, da auf das Hydrauliköl verzichtet wird. Man erreicht dabei auch eine höhere Energieeffizienz.

Gemäß der Erfindung mehreren ist es vorgesehen, dass der Elektromotor, als Zentralantrieb, mehrere Spannelemente über das wenigstens eine Kraftübertragungsmittel antreibt. In dieser Variante ist es dann so, dass der Elektromotor beispielsweise unterhalb der Spannebene angeordnet ist und ein Kraftübertragungsmittel mehrere Spannelemente gleichzeitig anzutreiben vermag. Hierbei ist der Aufwand für den Elektromotor und dessen Verkabelung relativ gering, allerdings ist es schwieriger individuelle Lösungen bezüglich der Spannkraft zu verwirklichen.

Demzufolge schlägt eine weitere Variante, vor, dass für jedes der Spannelemente ein Elektromotor als Antriebsmittel zur Erzeugung der Spannkraft vorgesehen ist. Nun lassen sich die einzelnen Elektromotoren auch mit unterschiedlichen Kräften beziehungsweise Momenten- steuern. Dabei kann auch die Baugröße des einzelnen Elektromotors geringer gehalten werden, als beispielsweise bei einem Elektromotor als Zentralantrieb. Beide Varianten sind allerdings von der Erfindung umfasst und lösen das gestellte Problem in hervorragender Weise und tragen zu den vorher beschriebenen, positiven Effekten bei.

Eine Effizienzsteigerung der Bearbeitungsmaschine und ihren Weiterbildungen beziehungsweise Ausführungsformen und Ausführungsformkombinationen, wird unter Anderem auch dadurch erreicht, dass anstelle aufwändiger Hydraulikkomponenten ein oder mehrere Elektromotor/en als Antrieb/e, insbesondere als mittelbare oder unmittelbare Spann- oder als Drehantrieb/e verwendet wird/werden.

Als wesentlich wird angesehen, wenn als Antrieb ein Elektromotor, insbesondere Servomotor Verwendung findet. Dieser Elektromotor ist als Synchron-, motor ausgebildet. Vorteilhaft bei der Verwendung von Servomotoren ist deren kompakte Bauform, der robuste Aufbau und die Möglichkeit zum Betrieb in einem geschlossenen Regelkreis. Der Betrieb kann dabei momentengeregelt, geschwindigkeitsgeregelt oder positionsgeregelt sein.

Als ebenfalls wesentlich wird angesehen, dass der Antrieb über einen geberlosen Synchronmotor erfolgt. Ein permanentmagneterregter Synchronmotor (PMSM) ist hierbei beansprucht. Dabei ist von dem Vorschlag gleichermaßen die Anordnung des/der Permanentmagnete/n als vergrabene/r Magnet/e oder als Oberflächenmagnet/e am Rotor umfasst, wobei die Verwendung vergrabener Magnete/n im Rotor als besonders vorteilhaft angesehen wird, da mechanische Belastungen im Rotorblechpaket auftreten und nicht an der Oberfläche. Zudem sind geringere Verluste im Permanentmagneten zu verzeichnen.

Der Einsatz von Permanentmagneten auf oder in dem Rotor erspart die bei Synchronmaschinen sonst vorhandene Erregerwicklung.

Als Vorteil der Verwendung geberloser Synchronmotoren wird angesehen, dass hier auf die zusätzliche Anordnung von Gebern oder Sensoren für die Rotorlagebestimmung verzichtet werden kann und sich die Baumaße entsprechend verringern. In den erfindungsgemäßen Bearbeitungsmaschinen beziehungsweise den hierin vorgesehenen Werkzeug- beziehungsweise Werkstückspann- beziehungsweise -drehvorrichtungen ist der Bauraum für die einzelnen Komponenten knapp bemessen, um eine möglichst kompakte Bauart des gesamten Bearbeitungszentrums realisieren zu können. Neben der Steigerung des Wirkungsgrades der Dynamik herkömmlicher Bearbeitungsmaschinen kann durch die Verwendung von geberlosen Motoren der Bauraum beziehungsweise können die Bauraumanforderungen seitens des Antriebes optimiert werden.

In einer als bevorzugt angesehenen Ausführungsform der Bearbeitungsmaschine, ist eine geberlose Rotorlagebestimmung, insbesondere eine geberlose Stillstandslageerkennung vorgesehen, die sich insbesondere über den geberlosen Synchronmotor realisieren lässt. So kann in einem geberlosen Synchronmotor beispielsweise die Position des Rotors mit Hilfe einer Anisothropie der resultierenden Induktivität in den verwendeten Statorspulen des Stators geschätzt werden. Beim Betrieb des Synchronmotors können abhängig von der Rotorlage in den Statorspulen verschiedenen resultierende Induktivitäten gemessen werden, über die sich die Position des Rotors abschätzen lässt. Als vorteilhaft wird in diesem Zusammenhang angesehen, wenn die Rotorlagebestimmung beziehungsweise die Stillstandslageerkennung software- oder NC-gesteuert durchführbar ist. Eine entsprechende Integration in die Maschinensteuerung, zum Beispiel eine Mikrocontroller umfassende Maschinensteuerung kann auf einfache Art und Weise realisiert werden.

Eine als günstig angesehene Möglichkeit zur Bestimmung der Rotorlage beziehungsweise der Stillstandslage sieht beispielsweise vor, dass dem Ansteuersignal zum Anlegen der Statorströme für die Statorspulen Messsignale so überlagert werden, dass zusätzlich zum Antriebsmagnetfeld ein Wechselmagnetfeld erzeugt wird, wobei die durch die Mehrsignale hervorgerufenen Stromflüsse durch die Statorspulen von der rotorlageabhängigen resultierenden Induktivität des Synchronmotors abhängt. Die resultierende Induktivität des Synchronmotors hängt von der Position des Rotors ab. Dabei basiert das Verfahren zur geberlosen Rotorlagebestimmung auf der Detektion der magnetischen Anisotopie von Längs- und Querinduktivität des Motors. Wird eine sich schnell ändernde Spannung an den Motor angelegt, so fällt die Spannung im Ständerstrang fast ausschließlich an der Rotorlageabhängigen Induktivität ab. Der erregte Strom wird somit durch die Rotorlage moduliert und kann dementsprechend ausgewertet werden. Die Signalstärke ist proportional zur Differenz von Längs- und Querinduktivität.

Die Eingangs- und Ausgangssignale werden von einer Steuerbeziehungsweise Messsoftware beziehungsweise der NC-Steuerung verarbeitet, um hierüber die Rotorlage beziehungsweise die Stillstandslage zu definieren. Diese definiert wiederum die Werkzeug-Einsatzposition beziehungsweise die Werkstück-Bearbeitungsposition beziehungsweise die Position des durch einen solchen Elektromotor angetriebenen Spannelements oder Spannvorrichtung für das Werkstück. Gegebenenfalls ist in der Maschinensteuerung für die Auswertung der Rotorlage ein separater Schaltkreis beziehungsweise ein hierfür programmierter Mikrocontroller vorgesehen.

Die Verwendung von Synchronmotoren hat neben der Reduzierung des für den Antrieb notwendigen Bauraumes weitere Vorteile. So werden die Installationskosten insgesamt reduziert, da Geberleitung, Geber und Geberschnittstelle wegfallen. Die Synchronmotoren ermöglichen eine hohe Dynamik und eine schlupffreie Bewegung. Neben dem reduzierten Platzbedarf weisen diese auch noch ein geringes Gewicht, dabei jedoch einen hohen Wirkungsgrad und eine hohe Verfügbarkeit auf. Die Lagebestimmung kann auf einfache Art und Weise in die Maschinensteuerung der erfindungsgemäßen Bearbeitungsmaschine integriert werden, eine Um-oder Nachrüstbarkeit bestehender Maschinen ist gegeben.

Ein weiterer Aspekt der Bearbeitungsmaschine ist dadurch angegeben, dass der Elektromotor von einer Steuerung, vorzugsweise von der Steuerung der Bearbeitungsmaschine als NC-Achse überwacht wird, wobei die Steuerung anhand dieser Daten die exakte Lage beziehungsweise die exakte Stellung des Spannelementes erkennt beziehungsweise ableitet und/oder die Steuerung anhand der festgestellten Daten beziehungsweise anhand des festgestellten Momentes die eingeprägte bzw. eingetragene Kraft des bzw. der Spannelemente(s) erkennt. Diese Variante der Erfindung ist insofern von Vorteil, da es jetzt gelingt - im Gegensatz zu bisher aufwendigen Kontrolleinrichtungen zur Überprüfung der entsprechenden Lage bzw. auch der eingetragenen Drehmomente bzw. der Kraft - anhand der Überwachung der NC-Achse bzw. des Elektormotors und dessen Parametern bezüglich Stromaufnahme, in einfacher Weise die erforderlichen Daten zur Verfügung zu stellen und zwar in den gewünschten Auflösungen bezüglich der einzelnen Spannelemente. Hiermit lässt sich auch der steuerungstechnische Aufwand bzw. der überwachungstechnische Aufwand einer solchen Bearbeitungsmaschine durch den Einsatz eines Elektromotors in Verbindung mit der Steuerung erheblich reduzieren. Des Weiteren werden die festgestellten Daten exakt auf die einzelnen Spannelemente zugeordnet, wodurch eine gegebenenfalls insgesamt günstigere Ansteuerung der einzelnen Elemente möglich wird.

Von Vorteil ist es, wenn ein Kraftübertragungsmitttel, wie z. B. ein Zahnriemen, eine Kette oder ein Getriebe, vorgesehen ist, dass die vom Elektromotor erzeugte Kraft bzw. das erzeugte Drehmoment auf die Spannelemente bzw. die Spannvorrichtung überträgt. Dabei ist es von Vorteil, wenn beispielsweise eine Kette vom Elektromotor zum Spannmittel über Ritzel geführt ist, um die Kräfte dort zu übertragen. Die Einprägung der Kraft kann dann entweder dem Spannmittel selbst durch dort integrierte Elemente bestimmt werden oder aber durch die direkt eingeprägte Kraft über den Elektromotor.

Vorgesehen ist auch eine mögliche Lösung, bei der der Elektromotor auf einem Motorwellenanschluss an der Spannvorrichtung bzw. am Spannmittel auf der gleichen Symmetrieachse oder parallel dazu angeordnet ist. Selbstverständlich ist auch eine Variante umfasst, bei der der Elektromotor winklig, bevorzugt rechtwinklig zur Symmetrieachse der Spannvorrichtung bzw. des Spannmittels orientiert angeordnet ist.

Es ist weiterhin vorgesehen, dass das Spannmittel einen Freilauf, eine Kupplung, bevorzugt als Rutschkupplung ausgebildet, oder dergleichen aufweist, um die zu übertragende Kraft zu begrenzen. Hier kann man beispielsweise den Freilauf bzw. die Kupplung als Rutschkupplung derart einstellen, dass jedes Spannmittel unterschiedliche Kräfte oder aber auch gleiche Kräfte einprägt. Selbstverständlich ist es auch möglich im Spannmittel beispielsweise eine Feder oder ein Federpaket vorzusehen, dass generell so wirkt, dass die notwendige Spannungskraft erzeugt wird. Der Elektromotor im Zusammenwirken mit dem Freilauf bzw. der Kupplung wirkt dann so, dass diese nur für das Lösen des Werkstückes, nach der erfolgten Bearbeitung eingesetzt werden und die dazu notwendige Kraft einprägen, um das Federpakt bzw. die Feder dann in eine angehobenen Position zu bewegen. Gleiches ist selbstverständlich auch möglich, wenn man anstelle einer Feder dort einen Hydraulikzylinder vorsieht, der dann direkt am oder im Spannmittel vorgesehen ist. Auf diese Variante wird allerdings noch später eingegangen werden.

An dem Spannmittel ist wenigstens eine Spannpratze vorgesehen, die zur Spannung des Werkstückes dient. Die Spannpratze ist in dem Sinne zu verstehen, dass sie an dem Werkstück oder aber an dem Werkzeug derart angreift, dass ein gewisser Formschluss vorhanden ist, in dem beispielsweise am Werkstück oder am Bearbeitungswerkzeug entsprechende Ausnehmungen bzw. Nuten oder Rinnen vorhanden sind, in die die Spannpratze einzugreifen vermag. Der Druck drückt dann das Werkstück bzw. Werkzeug entweder auf den Bearbeitungstisch bzw. in oder auf die Werkzeugaufnahme.

Wie bereits erwähnt, ist es von Vorteil, dass an bzw. in dem Spannelement, vorzugsweise in dem Spannmittel, ein druckerzeugendes Element, wie z. B. eine Druckfeder oder ein Federpaket vorgesehen ist, das im entkoppelten Zustand die Spannpratze in die Spannposition drückt bzw. bewegt und im gekoppelten Zustand der Elektromotor die Spannpratze in Ihre Ausgangs- bzw. Ruheposition bewegt. Als Ausgangs- bzw. Ruheposition ist hier die Position zu verstehen, in der das Werkstück entnommen werden kann.

Gemäß einer Variante der Bearbeitungsmaschine, ist es außerdem vorgesehen, dass an bzw. in dem Spannmittel ein Rückzugselement, wie z. B. eine Zugfeder vorgesehen ist, die die Spannpratze im entkoppelten bzw. nicht gespannten Zustand in einer Ausgangsposition bewegt. Dabei handelt es sich um die Umkehrlösung der vorher beschriebenen Variante, bei der die Druckfeder bzw. ein Federpaket die Spannpratze während des Spannvorganges mit Druck beaufschlagt und nur zum Lösen die Spannpratze durch die Kraft des Elektromotors in eine Ausgangsposition zurückbewegt worden ist. In der jetzt beschriebenen Variante wird genau der umgekehrte Weg beschritten, indem nämlich die Druckfeder beispielsweise auf Zug belastet wird, während die Spannpratze das Werkstück spannt und dann im entkoppelten Zustand die Zugfeder die Spannpratze in die Ausgangsstellung zurückholt.

Es wurde gefunden, dass es von Vorteil ist, wenn die Spannpratze einen nasenartig ausgebildeten Spannansatz aufweist, der in Spannrichtung winklig der Spannebene zugewandt um 1° bis 5°, bevorzugt um 2° abweichend von der Parallelen zur Spannebene angeordnet ist. Dadurch wird die Spannpratze bzw. der Spannansatz in Richtung des Werkstückes leicht geneigt, was den Spannvorgang verbessert bzw. das Eingreifen der Spannpratze an dem Werkstück erleichtert. Bezogen auf die Symmetrieachse des Spannelementes befindet sich der Spannansatz in einem Winkel von ca. 90° zu dieser Symmetrieachse mit der bereits beschriebenen Abweichung um 1° bis 5° bzw. bevorzugt 2°, dann abweichend von der 90°-Ebene in Richtung auf das Werkstück zugewandt.

Von Vorteil ist es auch, wenn die Spannpratze im Wesentlichen zur Spannebene bewegbar ist. Damit muss man am Werkstück bzw. an dem Werkstück tragenden Werkstückträger lediglich eine entsprechende Ausnehmung oder Nut vorsehen, mit der das Spannelement dort eingreifen kann.

Eine Weiterbildung der Bearbeitungsmaschine, sieht vor, dass das Spannelement als Spannzange ausgebildet ist. Spannzangen werden bevorzugterweise immer dann eingesetzt, wenn beispielsweise an der werkstücktragenden Palette oder am Werkstück selbst bestimme Spannmittel wie Spannbolzen oder dergleichen angeordnet sind, sodass die Spannzange diese Spannmittel umfassen kann. Die Lösung bezüglich des Elektromotors als Antriebsmittel für die Spannmittel kann in dieser Variante ebenfalls ausgenutzt werden.

Eine weitere günstige Ausführungsform, schlägt vor, dass das Spannelement kegelstumpfförmig ausgebildet ist und eine Aufnahme aufweist, in die ein Zapfen, der in einer werkstücktragenden Palette oder am zu bearbeitenden Werkstück angeordnet ist, für den Spannvorgang eingeführt wird. In modernen Bearbeitungszentren, in denen die Bearbeitungsmaschine Einsatz finden kann, ist es üblich, werkstücktragende Paletten mit solchen Zapfen zu versehen. Für diesen Fall ist dann das Spannelement korrespondierend zu diesen Zapfen ausgebildet um diese zu umfassen und für den Bearbeitungsvorgang zu spannen. Eine Weiterbildung hiervon schlägt vor, dass die Aufnahme von einer Spannzange umfasst ist, die vorzugsweise Spannklammern im gespannten Zustand gegen bzw. an den Zapfen drückt. Hierbei handelt es sich um eine vorteilhafte Weiterbildung, die den gesamten Spannvorgang noch effizienter gestaltet.

Von Vorteil ist es auch, wenn der Zapfen als Spannmittel einen Zapfenkopf aufweist. Vorteilhafterweise ist dieser Zapfenkopf an dem Zapfen angeformt. Dieser Zapfenkopf kann dabei zumindest teilweise kugelartig oder halbkugelartig ausgebildet sein oder entsprechende Abrundungen oder Fasen aufweisen.

Es wird vorgeschlagen, dass an der Spannzange das Kraftübertragungsmittel, welches von dem Elektromotor angetrieben wird, angreift. Hierbei kann es sich beispielsweise um ein Winkelgetriebe, einen Kettentrieb mit Kette und Ritzel oder um einen Zahnriemen mit einem entsprechen ausgebildeten Ritzel handeln.

Eine günstige Variante, die selbstverständlich auch im Zusammenhang mit sämtlichen, einzelnen oder Kombinationen der weiteren Varianten beziehungsweise einzelnen oder mehreren der dort genannten Merkmale realisiert werden kann, sieht auch vor, dass die Spannelemente und/oder die Spannzangen hydraulisch wirkend ausgebildet sind, wobei die druckerzeugende Hydraulikpumpe direkt am oder im Spannelement bzw. an oder in der Spannzange vorgesehen ist. Eingangs wurde der Vorteil einer solchen Lösung schon beschrieben, weil es in einer solchen Ausgestaltung nicht notwendig ist die aufwendigen Hydraulikaggregate vorzuhalten bzw. zu verrohren bzw. mit Schläuchen zu verbinden. Nach der Lösung treibt der Elektromotor eine druckerzeugende Hydraulikpumpe an, die direkt im oder am Spannelement angeordnet ist.

Damit hat man lediglich die Verbindung von der Hydraulikpumpe, gegebenenfalls zum Druckzylinder, am Spannmittel herzustellen, die direkt als Bohrung in dem Spannelement bzw. in der Spannzange zur Verfügung gestellt werden kann. Damit wird sozusagen das Hydraulikelement in das letzte mögliche Element beim Spannvorgang, nämlich in die Spannzange bzw. in das Spannmittel selbst verlegt. Die aufwendige Verrohrung und/oder das Vorsehen von entsprechenden Schlauchverbindungen, Verteilern und dergleichen entfällt komplett. Auch ist es hier nicht notwendig entsprechende gelenkige Elemente vorzusehen, die ein Verschwenken der Bearbeitungsebene ausgleichen müssen. Trotzdem hat man die durch die Hydraulik in der Regel etwas höheren Drücke für das Spannen der Werkstücke zur Verfügung.

Demzufolge wird durch die Lösung erreicht, dass an oder in dem Spannelement eine Hydraulikpumpe vorgesehen ist, die unabhängig von einem zentralen Hydraulikaggregat wirkt und die direkt an oder in dem Spannelement den notwendigen Anpressdruck zur Spannung der Werkstücke bzw. Werkzeuge erzeugt. Hierbei handelt es sich um eine sehr vorteilhafte Lösung, weil - wie bereits erwähnt, die hohen Anpressdrücke direkt im oder am Spannelement erzeugt werden können.

Als günstig wird angesehen, wenn eine Spannkraftkontrolle vorgesehen ist, mittels derer das exakte Spannen des Werkstückes überwacht wird. Dabei ist es auch möglich, dass unterschiedliche Spannkräfte an unterschiedlichen Spannelementen eingebracht bzw. eingestellt werden. Auch dies wird durch die Spannkraftkontrolle mit erreicht. Des Weiteren ist es natürlich anhand der Spannkraftkontrolle auch möglich, die exakte Spannung des zu bearbeitenden Werkstückes bzw. des Bearbeitungswerkzeuges festzustellen.

Moderne Bearbeitungszentren und Bearbeitungsmaschinen arbeiten mit einer sogenannten Nullpunktspanneinrichtung. Dabei ist es in der Regel so, dass bestimmte Punkte des zu spannenden Gegenstandes vorgegeben sind, um eine exakte Postionierung bzw. Ausrichtung des Werkstückes an bzw. auf der Bearbeitungsfläche zu erhalten. Demzufolge zeichnet sich eine vorteilhafte Weiterbildung der Bearbeitungsmaschine, die selbstverständlich auch im Zusammenhang mit sämtlichen, einzelnen oder Kombinationen der weiteren Ausführungsformen beziehungsweise Weiterbildungen beziehungsweise einzelnen oder mehreren Merkmalen dieser Ausführungsformen und/oder Weiterbildungen realisiert werden kann, dadurch aus, dass diese Nullpunktspanneinrichtung zur exakten Positionierung bzw. Ausrichtung des Werkstückes an bzw. auf der Bearbeitungsfläche vorgesehen ist. Dazu korrespondierende Mittel sind natürlich dann an dem jeweiligen Werkstück ebenfalls vorzusehen. Beim Positionieren bzw. bei der Ausrichtung des Werkstückes wir dann anhand dieser zusätzlichen Mittel erkannt, ob das zu bearbeitende Werkstück richtig positioniert ist. Ist es beispielsweise nicht richtig positioniert, kann z. B. anhand der Kontrolleinrichtungen zur Spannungskontrolle überprüft werden, ob alle Spannmittel exakt die vorgesehene Spannung aufweisen. Ist dies nicht der Fall, führt dies dazu, dass erneut gelöst und nochmal positioniert wird, bevor der Spannvorgang erneut wiederholt wird. Von Vorteil ist es auch, wenn an dem Spannmittel bzw. in dessen unmittelbarer Nähe und/oder auf der Bearbeitungsfläche bzw. der Spannfläche wenigstens eine Referenzfläche vorgesehen ist, um die exakte Postionierung des Werkstückes bzw. einer werkstücktragenden Palette zu bestimmen und/oder zu prüfen. Durch die Referenzfläche gelingt es mit etwas geringerem Aufwand als zuvor beschrieben, die exakte Positionierung festzustellen und gegebenenfalls vor dem Spannvorgang zu korrigieren.

Es ist weiterhin von Vorteil, wenn an dem Werkstück und/oder an der Spannfläche wenigstens ein Spannnippel vorgesehen ist, der zum Einen der Positionierung des Werkstückes auf der Spannfläche dient, der aber gleichzeitig auch dem Aufspannen des Werkstückes auf der Spannfläche zusätzlich oder alternativ dient. Daraus ergibt sich die Gelegenheit anhand der Spannnippel deren Positionierung festzustellen, ob das zu bearbeitende Werkstück, was für die Bearbeitungsgenauigkeit von hoher Bedeutung ist, genau richtig positioniert ist.

Ein weiterer Vorteil ist es dabei, wenn an oder in dem Spannnippel wenigstens ein Identifizierungsmittel, wie z. B. ein Datenträger, Transponder oder Barcode vorgesehen ist, der Werkstückinformationen und/oder Werkstückbearbeitungsinformationen aufweist. Hier erhält man sozusagen einen mehrfachen Nutzen dadurch, dass man zum Einen mit Hilfe der Spannippel natürlich die exakte Positionierung vornehmen kann, zum Anderen erhält man gleichzeitig Informationen, ob das zu bearbeitende Werkstück das richtige ist, das gerade für die Bearbeitung benötigt wird und insbesondere werden auch Werkstückbearbeitungsinformationen erhalten, die dann für die Bearbeitung Verwendung finden können. Demzufolge wird hierdurch eine sehr geschickte Variante zur Verfügung gestellt, die die Effekte aus der Erfindung deutlich noch erhöht.

Dieser Datenträger kann dabei zusätzlich oder alternativ z. B. mit einem separaten Befestigungsmittel an dem Spannippel angeordnet sein. Als Befestigungsmittel kann dabei eine Schraube genauso verwendet werden wie das übliche Kleben oder das Vorsehen von entsprechenden Kerbstiften, die das Identifizierungsmittel bzw. den Datenträger befestigen.

In der Erfindung ist vorgesehen, dass die von dem Elektromotor angetriebene Motorwelle einen Adapteranschluss aufweist, der zur wahlweisen Verbindung der Motorwelle mit einem Kraftübertragungsmittel für das oder die Spannelemente oder zur Verbindung der Motorwelle mit einem Drehfutter dient, welches der mittelbaren oder unmittelbaren Aufnahme des Werkstückes für rotatorische Schleif- oder Drehbearbeitungen am Werkstück dient.

So ist der Elektromotor im Werkstücktisch ortsfest, gegebenenfalls in dem Rundtisch mit integriert, ausgebildet. In dieser Ausgestaltung erbringt der Elektromotor seine Funktion als Spannantrieb für die Spannelemente der Spannvorrichtung auch dann, wenn das Werkstück auf dem Werkstücktisch aufgespannt um eine Bearbeitungsachse (rechtwinklig zur Aufspannebene) gedreht wird. Die die Spannelemente tragende Tragplatte ist so ausgebildet, dass diese zum Einen exakt in seiner Lage am Werkstücktisch festlegbar ist, aber in einfacher Weise auch demontierbar ist, um so auch gleichzeitig die von der Tragplatte getragene Spannvorrichtung abzubauen. Da der Elektromotor ortsfest bleibt, ist ein Adapteranschluss als Kupplung vorgesehen, der bei abgehobener Tragplatte dann frei wird. Auf dem Adapteranschluss ist dann zum Beispiel ein Drehfutter montierbar, um so ein Werkstück aufzunehmen und für eine rotatorische Schleif-oder Drehbearbeitung vorzuhalten.

Die vorgeschlagene Bearbeitungsmaschine, eröffnet die Möglichkeit, das Werkstück nicht nur wie auf einem Rundtisch um eine Drehachse zu positionieren, sondern auch in Rotation zu versetzen, um so eine Bearbeitung zu erlauben.

Die rotatorische Schleif- oder Drehbearbeitung umfasst dabei sowohl umfangseitige wie auch innenseitige oder stirnseitige Bearbeitungen an dem Werkstück.

In der Zeichnung ist die Erfindung insbesondere in einem Ausführungsbeispiel schematisch dargestellt. Es zeigen:
- Fig. 1: eine Seitenansicht der erfindungsgemäßen Bearbeitungsmaschine,
- Fig. 2a, 2b: jeweils in einer dreidimensionalen Ansicht (Fig. 2a Draufsicht, Fig. 2b Unteransicht) die Tragplatte der erfindungsgemäßen Bearbeitungsmaschine,
- Fig. 3, 4, 6, 7: jeweils in einer Ansicht verschiedene Ausgestaltungen des Spannelementes nach der Erfindung,
- Fig. 5: in einer Seitenansicht ein Details des Elektromotors der erfindungsgemäßen Bearbeitungsmaschine,
- Fig. 8: eine Seitenansicht einer weiteren Ausführungsform der erfindungsgemäßen Bearbeitungsmaschine mit Nullpunktspannung,
- Fig. 9: Detail aus Fig. 8.

In den Figuren sind gleiche oder einander entsprechende Elemente jeweils mit den gleichen Bezugszeichen bezeichnet und werden daher, sofern nicht zweckmäßig, nicht erneut beschrieben.

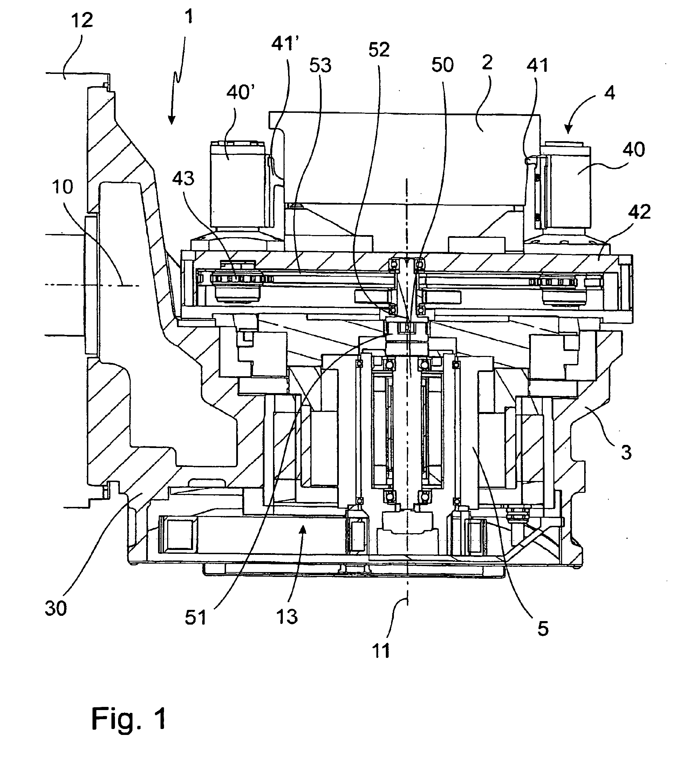

In Fig. 1 ist die Erfindung schematisch gezeigt. Die Bearbeitungsmaschine 1 umfasst zum Einen einen Werkstücktisch 3, der das Werkstück 2 hält. In Fig. 1 nicht gezeigt ist das Bearbeitungswerkzeug, das zum Beispiel als Bohrer oder Fräser ausgebildet ist, von einer Werkzeugspindel angetrieben ist und in geeigneter Weise relativ zu dem Werkstück 2 bewegbar ist. Die Bearbeitungsmaschine 1 nach der Erfindung besitzt eine Mehrzahl von Achsen. Um eine möglichst flexible Bearbeitung zu erreichen ist vorgesehen, dass das Werkstück 2 relativ zu dem Bearbeitungswerkzeug entlang der drei Raumachsen positionierbar ist. Neben diesen Longitutinalachsen sind aber auch Rotationsachsen vorgesehen. Eine erste Rotationsachse ist mit dem Bezugszeichen 10 gekennzeichnet und wird als B-Achse bezeichnet. Sie ermöglicht eine Drehung des Werkstücktisches 3 um eine horizontal orientierte Drehachse 10. Dabei ist die Anordnung so gewählt, dass der Werkstücktisch 3 eine Konsole 30 aufweist, die zum Beispiel einseitig an einem Schlitten oder Säule 12 angeordnet ist. Bei einer schlittenartigen Ausgestaltung ist dann zum Beispiel eine Bewegung in vertikaler Richtung (rechtwinklig zur Achse 10) möglich.

Des Weiteren ist vorgesehen, dass das Werkstück 2 um eine in Fig. 1 vertikal orientierte weitere Drehachse 11 drehbar ist. Da die Ausrichtung dieser Drehachse abhängig ist von der Stellung der Konsole 30 um die Drehachse 10, ist natürlich die zweite Drehachse 11 (zum Beispiel als A-Achse bezeichnet) nicht festgelegt, sie steht allerdings rechtwinklig auf der ersten Achse 10.

Für eine Drehung des Werkstückes 2 um die zweite Achse 11 ist an der Bearbeitungsmaschine 1 ein bevorzugt elektrisch ausgeführter Drehantrieb 13 vorgesehen.

Es wird betont, dass die erfindungsgemäße Ausgestaltung sowohl bei Bearbeitungsmaschinen 1 realisierbar ist, die, wie gezeigt, mit einer Rotationsmöglichkeit des Werkstücktisches 3 um verschiedene Raumachsen 10, 11 ausgestattet ist, wie auch bei Bearbeitungsmaschienen, die eine solche Rotationsmöglichkeit nicht bieten, also zum Beispiel nur entlang der Längsachsen beweglich ist oder komplett festgehalten also ortsfest ausgebildet sind.

Die Erfindung ist insofern frei bei der Aufteilung der verschiedenen Bewegungs- oder Rotationsachsen auf die Positionierung des Werkstückes oder des Bearbeitungswerkzeuges.

Anstelle von der hier gezeigten konsolenartigen (30) Ausgestaltung des Werkstücktisches 3, ist natürlich auch eine portalartige Ausgestaltung möglich.

Das zu bearbeitende Werkstück 2 ist mit Hilfe der Spannvorrichtung 4 auf einer zum Werkstücktisch 3 zählenden Tragplatte 42 aufgespannt.

Die in Fig. 1 gezeigte Ausgestaltung der Erfindung ist so gewählt, dass die Spannvorrichtung 4 mehrere Spannelemente 40, 40' umfasst. Die einzelnenen Spannelemente 40, 40' sind im Wesentlichen gleichartig ausgebildet und besitzen eine seitlich vorstehende Spannpratze 41, 41', die längsbeweglich an dem Spannelement vorgesehen ist. Die Spannpratze 41, 41' greift an entsprechenden Positionen an den Werkstück ein und presst dieses auf die Tragplatte 42. Neben dieser unmittelbaren Verbindung ist es natürlich auch möglich, dass die Spannpratze mittelbar das Werkstück hält, zum Beispiel, wenn das Werkstück 2 auf einem Werkstückträger oder Palette oder Ähnlichem befestigt ist.

Die Spannpratze 41 ist rechtwinklig zur Ebene der Tragplatte 42 längsbeweglich. Diese Längsbewegung wird durch einen Spindelantrieb in dem Spannelement 40 realisiert, bei welchen die Spannpratze 41 Teil einer Spindelmutter ist, die auf einer angetriebenen Spindel läuft. Koaxial auf dieser Spindel ist ein Zahnrad 43 vorgesehen, welches über eine Kette oder ein anderes Kraftübertragungsmittel 53 mit einem Zentralantrieb verbunden ist. Die Ausgestaltung ist dabei so gewählt, dass alle Spannelemente in gleicher Weise von dem Zentralantrieb angetrieben werden und eine endlos umlaufende Kette 53 als Kraftübertragungsmittel vorgesehen ist.

Als Zentralantrieb ist erfindungsgemäß ein Elektromotor 5 vorgesehen, der mit einem entsprechenden Antriebsritzel und/oder einem Getriebe ausgestattet ist und so die Kette oder ein sonstiges Kraftübertragungsmittel 53 antreibt.

Dabei ist es günstig, dass durch eine Umsteuerung der Rotationsrichtung des Elektromotors die Öffnungs- oder Schließbewegung der Pratze 41, 41' beeinflussbar ist.

Der Aufbau des Elektromotors 5 ist wie üblich. Eine aus dem Gehäuse des Elektromotors 5 vorstehende Motorwelle wirkt als Rotor und trägt entsprechende Drehmoment-, Drehimpuls- oder Kraftübertragungselemente, wie zum Beispiel ein Ritzel, Antriebsritzel, Getriebe oder Ähnliches.

Der Elektromotor 5 ist als geberloser Permanentmagnet erregten Synchronmotors. Derartige Motoren weisen geringe Baumaße auf und erlauben zudem eine geberlose Rotorlagebestimmung beziehungsweise Stillstandslageerkennung.

In dem hier gezeigten Ausführungsbeispiel ist ein Elektromotor 5 als Zentralantrieb vorgesehen, der auf mehrere Spannelemente 40, 40' wirkt. In einem alternativen erfindungsgemäßen Konzept ist aber auch vorgesehen, dass jedes einzelne Spannelement einen Direktantrieb aufweist und so jedem einzelnen Spannelement ein eigener Elektromotor zugeordnet ist.

Zentraler Bestandteil der Erfindung ist dabei der Einsatz eines Elektromotores in nächster Nähe zum Werkstück 2. Die vom Elektromotor 5 angetriebene Motorwelle 50 wirkt dabei möglichst direkt, zum Beispiel über die Motorwelle selber, über ein Getriebe, ein sonstiges Kraftübertragungsmittel oder über eine Hydraulikleitung auf das Spannelement und prägt entsprechende Spannkraft in diesem ein so, dass das Werkstück sicher gehalten ist.

Zwischen der Spindel in dem Spannelement 40 und dem Kettenantrieb ist eine Rutschkupplung vorgesehen, in welcher die Spannkraft des Spannelementes begrenzbar ist. Die Spannkraft wird dabei durch einen selbsthemmendes Getriebe, einen selbsthemmenden Motor oder eine sonstige Bremse aufrechterhalten.

Durch Überwachung der Stromaufnahme des Elektromotors ist dabei nun möglich, die einzelnen Spannzustände der Spannelemente 40 elegant und einzeln zu überwachen.

An den Pratzenantrieben mit Hilfe der Spindeln und den Ritzeln ist auch ein Freilauf vorgesehen, um das Wiederöffnen der Spannelemente zu erreichen.

Geschickter Weise ist zwischen dem Elektromotor 5 und den einzelnen Spannelementen 40, 40' der Spannvorrichtung 4 auch ein Getriebe vorgesehen, durch welches eine Übersetzung zur Drehmomenterhöhung möglich ist.

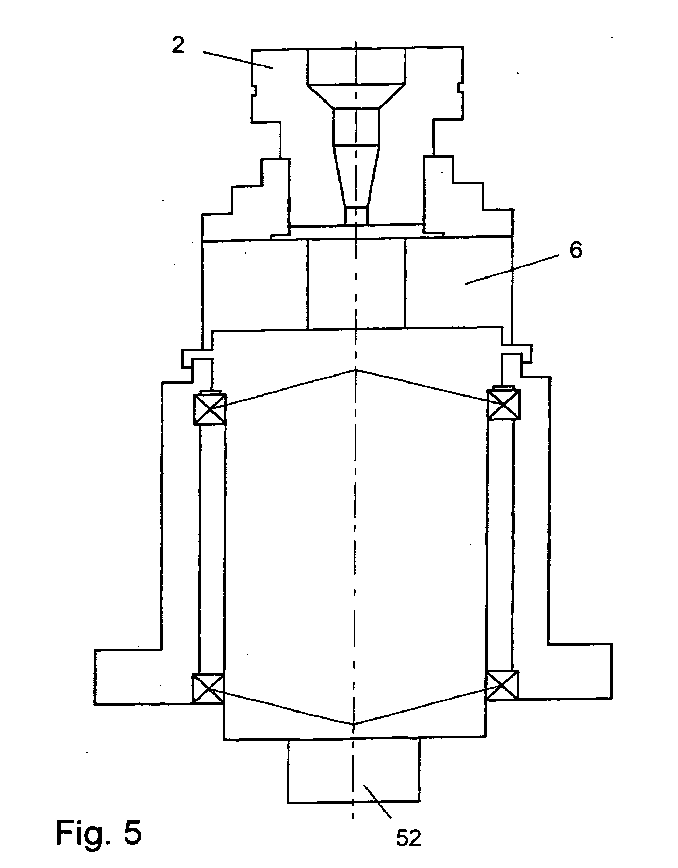

Ein wesentlicher Vorzug der Erfindung liegt auch darin, dass auf der Motorwelle 50 ein Adapteranschluss 51 vorgesehen ist und die gesamte Tragplatte 42 vom Werkstücktisch 3 in einfacher Weise abbaubar ist und so in den Adapteranschluss 51 zum Beispiel ein Drehfutter einsetzbar ist, in welchem dann ein anderes Werkstück 2 einspannbar ist. So kann in kurzer Frist die erfindungsgemäße Bearbeitungsmaschine von einer Fräsbearbeitung zu einer Drehbearbeitung umgerüstet werden. Das Beispiel für ein entsprechendes Drehfutter ist in Fig. 5 gezeigt.

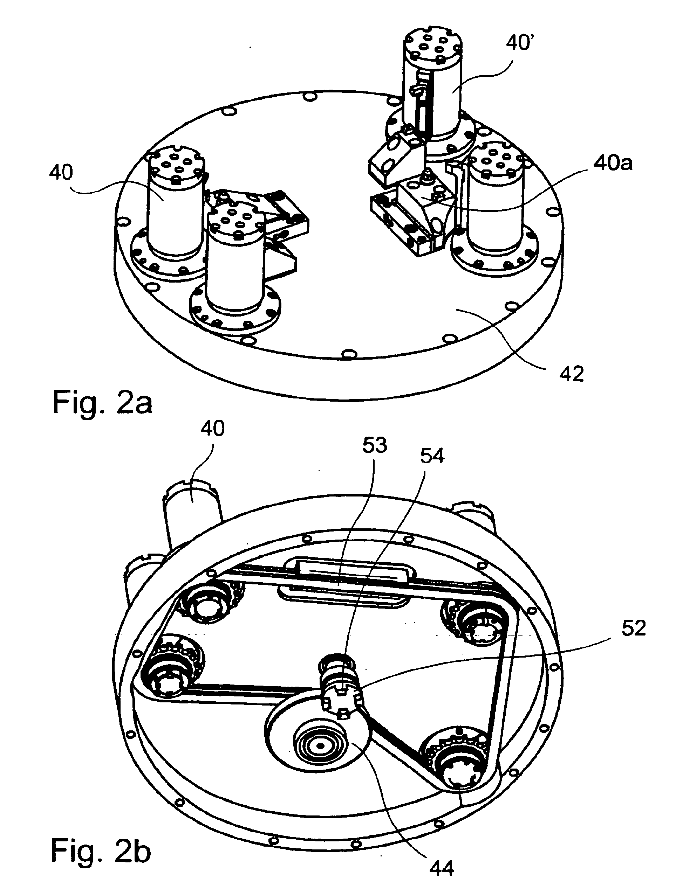

In Fig. 2a, 2b ist die Tragplatte 42 in einer Draufsicht (Fig. 2a) und in einer Unteransicht (Fig. 2b) gezeigt. Auf der Unterseite der Tragplatte 42 ist das Motorwellenanschlussstück 52 zu sehen. Es besitzt mehrere seitliche Mitnehmer 54, die in die entsprechende Ausnehmung des Adapteranschlusses 51 der Motorwelle 50 (vgl. Fig. 1) eingreift und so das Drehmoment übertragen.

Durch die Rotation der Motorwelle 50 wird auch das drehbar gelagerte Motorwellenanschlussstück 52 in Rotation versetzt. Das Motorwellenanschlussstück 52 treibt dann direkt oder gegebenenfalls über ein Getriebe ein Kraftübertragungsmittel 53, hier zum Beispiel eine Kette oder Rollenkette, an. Diese Kette 53 ist über die Zahnräder der einzelnen Spannelemente 40 geführt und treibt diese gleichsinnig an. Zusätzlich treibt das Motorwellenanschlussstück 52 auch ein Antriebsrad 44 eines weiteren, etwas anders ausgestalteten Spannelementes 40a an. Es kann sich hierbei zum Beispiel um eine sogenannte Nullpunktspannvorrichtung handeln mit welchem eine exakte Positionierung des Werkstückes beziehungsweise des das Werkstück tragenden Werkstückträgers/Palette erfolgt. Es ist erwähnt worden, dass als Kraftübertragungsmittel 53 nicht nur mechanisch wirkende Elemente vorgesehen sind, sondern auch wiederum eine hydraulisch betriebene Spannvorrichtung vorgesehen ist. Dies widerspricht in keinster Weise dem erfindungsgemäßen Gedanken! Wie deutlich in Fig. 2b zu sehen, befindet sich das Spannelement 40a, welches hydraulisch betrieben wird, auf der gleichen Rotationsebene wie das Werkstück, das heißt, diese beiden Elemente werden gegeneinander nicht mehr verdreht, eine aufwendig abzudichtende Drehverteilung ist hier nicht notwendig, die hydraulische Verrohrung ist denkbar einfach. Auf der anderen Seite ist die Ausgestaltung einer Nullpunktspannvorrichtung als Bauelement standartisiert und ist mit einer Hydraulikbeaufschlagung ausgestattet. Es ist ein Vorzug der Erfindung, dass mit Hilfe des erfindungsgemäß vorgeschlagenen Elektromotors 5 auch eine (kleine) Hydraulikpumpe hiervon angetrieben werden kann, die dann für das hydraulisch betriebene Spannelement 40a als Nullpunktspannvorrichtung vorgesehen und eingesetzt ist. Das Antriebsrad 44 wirkt dabei in geeigneter Weise auf diese kleine Hydraulikpumpe.

Zu erwähnen ist noch, dass durch eine geschickte Führung der Pratze in dem Spannelement, zum Beispiel in einer Kullissenführung, die Pratze auch eine Drehbewegung ausführen kann. Die erfindungsgemäßen Bearbeitungsmaschine wird oftmals automatisch be- und entladen und die Pratze ist dann gleichzeitig aus dem Bewegungsraum des ein- und auszuliefernden Werkstückes zu entfernen. Durch eine Überwachung der Drehbewegungen des Elektromotors ist daher auch die Position der einzelnen Spannpratzen 41 überwachbar und aufgrund der Zwangsführung ist eine solche Anordnung auch betriebssicher.

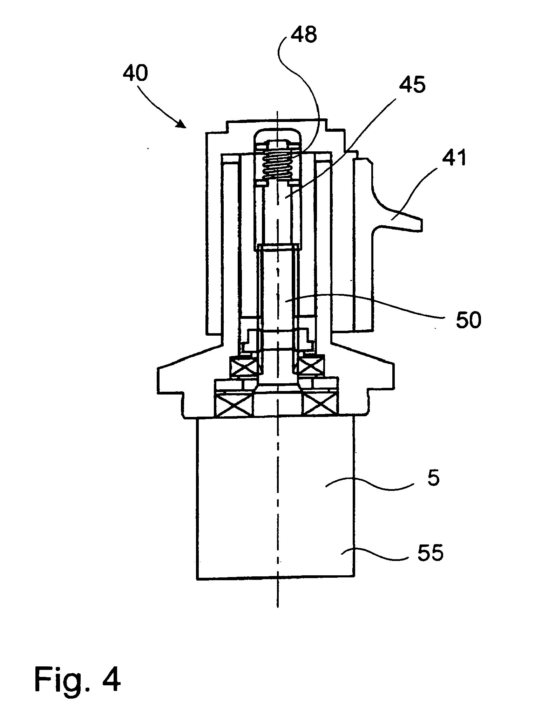

Fig. 4 zeigt einen beispielhaften Aufbau eines Spannelementes 40, bei welchem ein Elektromotor 5 als Direktantrieb 55 angeschlossen ist. Dabei treibt die Motorwelle 50 gleich die Spindel 45 des Spannelementes 40 an, die Pratze 41 sitzt über einer Spindelmutter auf der Spindel 45. Eine Zugfeder 48 bewegt die Spannpratze 41 im entkoppelten bzw. nicht gespannten Zustand in eine Ausgangsposition. In einer nicht dargestellen, aber vorher beschriebenen Variante, wird die Feder als Druckfeder, im gekoppelten Zustand zusammengedrückt, damit die Spannpratze 41 in die nicht spannende bzw. nicht wirkende Stellung bewegt wird.

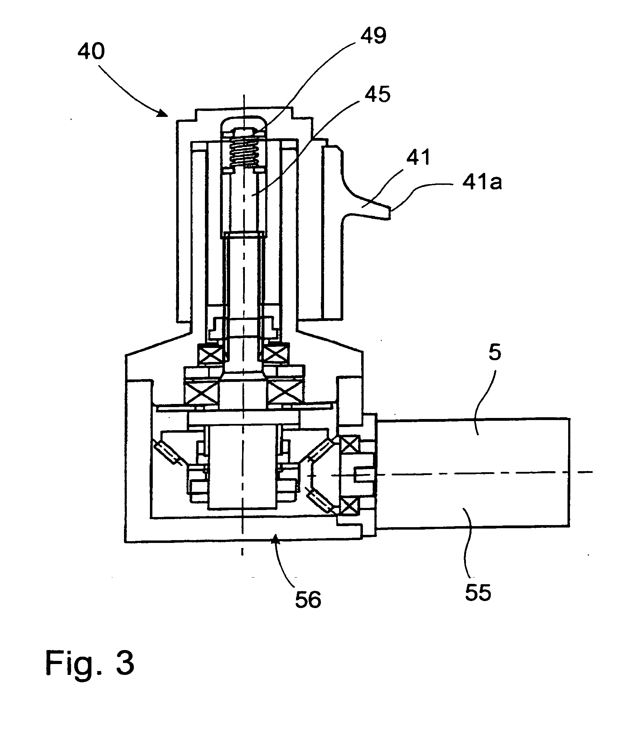

In Fig. 3 ist eine alternative Variante für das Spannelement 40 gezeigt. Wiederum ist in dem Spannelement ein eigener als Direktantrieb 55 wirkender Elektromotor 5 zugeordnet, der über eine Winkelgetriebe 56 auf die Spindel 45 wirkt. Das Spannelement 40 weist ein druckerzeugendes Element 49 auf, das im Ausführungsbeispiel als Druckfeder bzw. Federpaket ausgebildet ist. Das druckerzeugende Element drückt die Spannpratze 41, 41' im entkoppelten Zustand in die Spannposition. Die Spannpratze 41, 41' weist zudem einen nasenartig ausgebildeten Spannansatz 41a auf, der an dem Werkstück 2 anliegt bzw. in dieses eingreift. Der Spannansatz 41a ist in Spannrichtung winklig der Spannebene zugewandt.

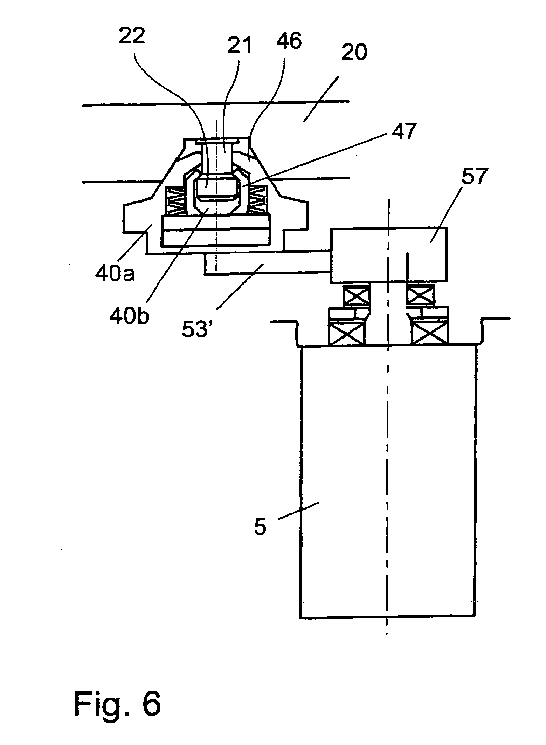

In Fig. 6 ist eine weitere alternative Variante des Spannelementes 40a gezeigt. Das hier nicht gezeigte Werkstück 2 ist auf einem Werkstückträger 20 oder Palette 20 angeordnet und hierauf exakt fixiert. Der Werstückträger 20 besitzt auf seiner Unterseite zumindest einen Zapfen 21, der in das Spannelement 40a bzw. in eine Aufnahme 40b einsteht.

Das Spannelement 40a besitzt Spannzangen 46, die den Zapfenkopf 22 hintergreifen. Die Bedienung der Spannzangen 46 erfolgt nun bevorzugt hydraulisch. Das Kraftübertragungsmittel 53' ist hierbei das unter entsprechendem Arbeitsdruck stehende Hydraulikmedium, der erfindungsgemäße vorgeschlagene Elektromotor 5 wirkt daher auf eine Hydraulikpumpe 57, die ein entsprechendes Druckniveau erzeugt.

In Fig. 5 ist in einer Detailansicht das Dreh- oder Backenfutter 6 gezeigt. Wie beschrieben, erlaubt der erfindungsgemäße Vorschlag eine Demontage der Tragplatte 42 von dem Werkstücktisch 3. An dem dem Motor entferntliegenden Ende der Motorwelle 50 befindet sich der Adapteranschluss 51. In diesen steht das Motorwellenanschlussstück 52 des Dreh- oder Backenfutters 6 in gleicher Weise ein.

Das Dreh- oder Backenfutter 6 ist im Übrigen wie üblich ausgebildet und erlaubt ein radiales Ergreifen des Werkstückes 2. Gegebenenfalls sind zusätzliche Verbindungs- oder Befestigungsmittel vorgesehen, um das Backenfutter 6 auf der Motorwelle 50 oder dem Werkstücktisch 3 zu befestigen.

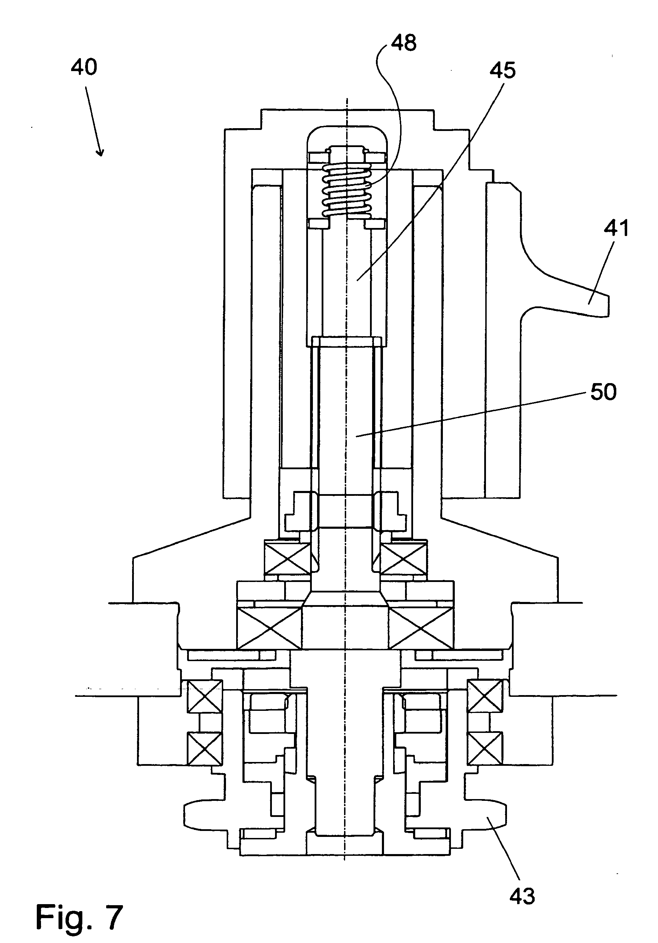

Fig. 7 zeigt eine weitere Ausführungsform des Spannelmentes nach der Erfindung. Im Unterschied zu den bereits vorgestellten Varianten befindet sich hier unterhalb des Spannelementes 40 ein Zahnrad 43, welches als Kettenritzel ausgebildet ist, an dem beispielsweise eine Kette als Kraftübertragungsmittel 53 angreift. Alle anderen Bezugszeichen entsprechen den bereits vorgestellten Bezugszeichen, so dass auf eine erneute Vorstellung verzichtet wird.

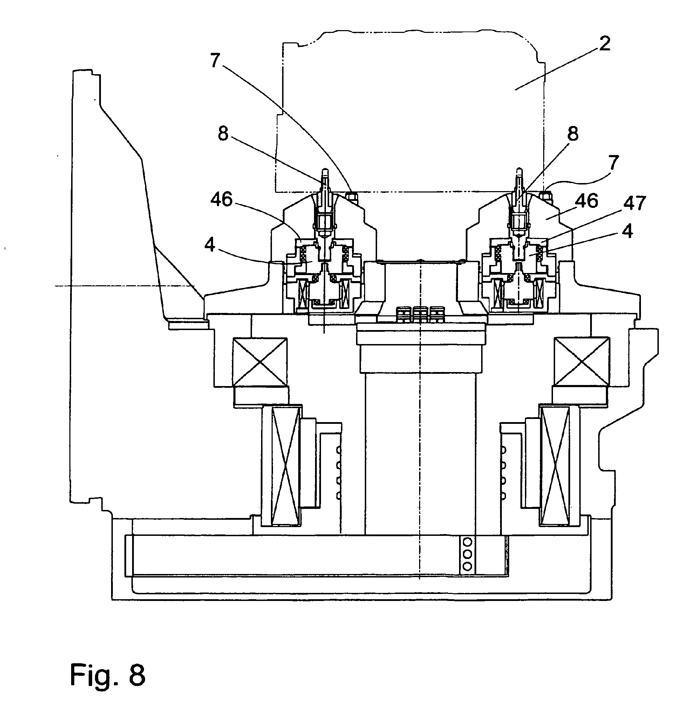

Die Fig. 8 zeigt in Seitenansicht eine weitere Ausführungsform einer erfindungsgemäßen Bearbeitungsmaschine mit Nullpunktspannung. Dabei ist lediglich ein Teil der Bearbeitungsmaschine dargestellt, der sichtbar macht, wie hier die Spannmittel im Zusammenwirken mit einer Nullpunktspannung eingesetzt werden. Die Null-Punkt-Spanneinrichtung dient, wie bereits erwähnt, zu exakten Positionierung beziehungsweise Ausrichtung des Werkstückes 2 an beziehungsweise auf der Bearbeitungsfläche. In dem vorgestellten Fall der Fig. 8 befinden sich an den Spannelementen Referenzflächen 7. Diese Referenzflächen 7 dienen der Erleichterung der exakten Positionierung des Werkstückes beziehungsweise einer werkstücktragenden Palette 2a. Aufgrund dieser Referenzflächen kann festgestellt werden, ob das Werkstück 2 exakt positioniert ist oder nicht.

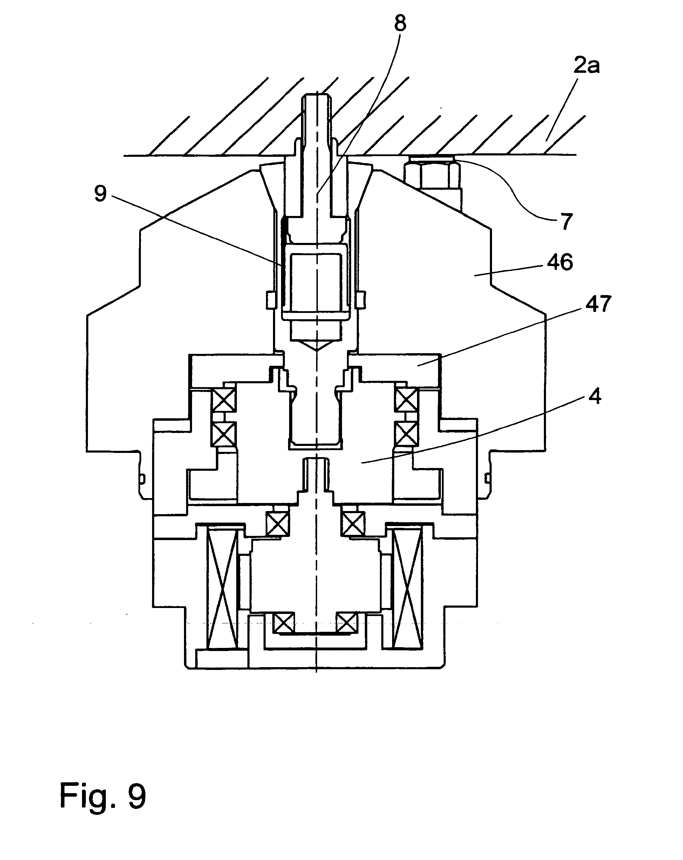

Das Werkstück 2 hat auf der der Spannvorrichtung zugewandten Seite Spannnippel 8. Diese Spannnippel 8 werden von Spannzangen 46 umfasst. In den Spannzangen 46 sind ebenfalls, wie weiter vorn bereits beschrieben, Spannklammern 47 angeordnet, die der weiteren Verbesserung der Spannung des Spannnippels 8 dienen. Durch diese Ausgestaltung gelingt es, den Spannvorgang äußerst exakt zu gestalten, indem hier die Vorzüge der Nullpunktspannung mit den Vorzügen der elektromechanischen Spannung kombiniert werden. Anstelle einer Anordnung am Werkstück 2 kann der Spannnippel 8 auch an einer das Werkstück tragenden Palette 2a angeordnet sein. Diese Palette 2a ist schematisch in Fig. 9 dargestellt.

In Fig. 9 ist dabei ein Detail aus der Fig. 8 dargestellt, anhand dessen erkennbar ist, dass an dem Spannnippel 8 ein Datenträger 9 vorgesehen ist. Anstelle des Werkstückes 2 ist hier eine das Werkstück 2 tragende Palette 2a schematisch gezeigt. Der Datenträger 9 kann entweder als Transponder, als Barcode oder als anderes Informationsübertragungsmittel ausgestaltet sein. Dieser Datenträger 9 enthält entweder Werkstückinformationen über das zu bearbeitende Werkstück 2 sowie günstigenfalls auch Werkstückbearbeitungsinformationen, sodass nach dem Spannen die Steuerung sofort erkennt, welche Bearbeitung durchgeführt werden soll und die entsprechenden Steuervorgänge einleitet.

## Patentansprüche

1. Bearbeitungsmaschine (1) für das Bearbeiten eines oder mehrerer Werkstücke (2), wobei das Werkstück (2) in der Bearbeitungsmaschine (1) auf oder an einem nicht drehbaren oder um mindestens eine Achse drehbaren Werkstücktisch (3) mittelbar oder unmittelbar durch eine Spannvorrichtung (4) gehalten ist, wobei die Spannvorrichtung (4) mindestens ein Spannelement (40, 40', 40a) umfasst, welches mit dem Werkstück (2) unmittelbar zusammenwirkt, wobei die Spannvorrichtung (4) auf dem Werkstücktisch (3) mittels einer Tragplatte (42) aufgespannt ist, ein Elektromotor (5) für die Erzeugung der Spannkraft vorgesehen ist, der in Wirkverbindung mit dem Spannelement (40, 40', 40a) steht und der Elektromotor (5) das Spannelement (40, 40', 40a) unmittelbar antreibt, der Elektromotor (5) als Zentralantrieb mehrere Spannelemente (40, 40', 40a) über das wenigstens eine Kraftübertragungsmittel (53) antreibt und eine von dem Elektromotor (5) angetriebene Motorwelle (50) einen Adapteranschluss (51) aufweist zur alternativen Verbindung der Motorwelle (50) mit wenigstens einem Kraftübertragungsmittel (53) für das oder die Spannelement/e (40, 40', 40a) oder zur Verbindung der Motorwelle (50) mit einem Dreh- oder Backenfutter (6), welches der mittelbaren oder unmittelbaren Aufnahme des Werkstückes (2) für rotatorische Schleif- oder Drehbearbeitung am Werkstück (2) dient, **dadurch gekennzeichnet, dass** der Elektromotor (5) als geberloser Synchronmotor vorgesehen ist und wobei der Synchronmotor als Permanentmagnet erregter Synchronmotor (PMSM) ausgebildet ist

2. Bearbeitungsmaschine nach Anspruch 1, **dadurch gekennzeichnet, dass** für jedes der Spannelemente (40, 40', 40a) ein Elektromotor (5) als Antriebsmittel zur Erzeugung der Spannkraft vorgesehen ist, wobei als Kraftübertragungsmittel (53) ein Zahnriemen, eine Kette, ein Getriebe oder dergleichen vorgesehen ist.

3. Bearbeitungsmaschine nach einem der vorhergehenden Ansprüche, **dadurch gekennzeichnet, dass** der Elektromotor (5) von einer Steuerung der Bearbeitungsmaschine (1), als NC-Achse überwacht wird, wobei die Steuerung anhand dieser Daten die exakte Lage bzw. die exakte Stellung des Spannelementes (40, 40', 40a) erkennt bzw. ableitet oder die Steuerung anhand der festgestellten Daten bzw. anhand des festgestellten Momentes die eingeprägte bzw. eingetragene Kraft des bzw. der Spannelemente(s) (40, 40', 40a) erkennt.

4. Bearbeitungsmaschine nach einem der vorhergehenden Ansprüche, **dadurch gekennzeichnet, dass** der Elektromotor (5) auf einem Motorwellenanschluss (52) an der Spannvorrichtung (4) oder am Spannmittel (40, 40', 40a) auf der gleichen Symmetrieachse, parallel dazu oder der Elektromotor (5) winklig, bevorzugt rechtwinklig zur Symmetrieachse der Spannvorrichtung (4) oder des Spannmittels (40, 40', 40a) orientiert angeordnet ist.

5. Bearbeitungsmaschine nach einem der vorhergehenden Ansprüche, **dadurch gekennzeichnet, dass** das Spannelement (40, 40', 40a) einen Freilauf, eine Kupplung, als Rutschkupplung ausgebildet, aufweist, um die zu übertragende Kraft zu begrenzen oder an dem Spannelement (40, 40', 40a) wenigstens eine Spannpratze (41, 41') vorgesehen ist, die zur Spannung des Werkstückes (2) dient, wobei an bzw. in dem Spannelement (40, 40', 40a) ein druckerzeugendes Element (49), wie z. B. eine Druckfeder bzw. ein Federpaket vorgesehen ist, das im entkoppelten Zustand die Spannpratze (41, 41') in die Spannposition drückt bzw. bewegt und im gekoppelten Zustand der Elektromotor (5) die Spannpratze (41, 41') in ihre Ausgangs- bzw. Ruheposition bewegt oder an bzw. in dem Spannelement (40, 40', 40a) ein Rückzugselement, wie zum Beispiel eine Zugfeder (48), vorgesehen ist, die die Spannpratze (41, 41') im entkoppelten bzw. nicht gespannten Zustand in eine Ausgangsposition bewegt, wobei die Spannpratze (41, 41') einen nasenartig ausgebildeten Spannansatz (41a) aufweist, der in Spannrichtung winklig der Spannebene zugewandt, um 1° bis 5°, bevorzugt 2° abweichend von einer parallelen Ebene zur Spanneben angeordnet ist und/oder die Spannpratze (41, 41') im Wesentlichen rechtwinklig zur Spannebene bewegbar ist.

6. Bearbeitungsmaschine nach einem der vorhergehenden Ansprüche, **dadurch gekennzeichnet, dass** das Spannelement (40a) als Spannzange (46) ausgebildet ist oder das Spannelement (40a) kegelstumpfförmig ausgebildet ist und eine Aufnahme (40b) aufweist, in ein Zapfen (21), der an einer werkstücktragenden Palette (2a) oder am zu bearbeitenden Werkstück (2) angeordnet ist, für den Spannvorgang eingeführt wird, insbesondere wobei an dem Zapfen (21) ein Zapfenkopf (22) angeformt ist, wobei die Aufnahme (40b) von der Spannzange (46) umfasst ist, die Spannklammern (47) im gespannten Zustand gegen bzw. an den Zapfen (21) drückt und an der Spannzange (46) das Kraftübertragungsmittel (53'), das von dem Elektromotor (5) angetrieben wird, angreift.

7. Bearbeitungsmaschine nach einem der vorhergehenden Ansprüche, **dadurch gekennzeichnet, dass** die Spannelemente (40, 40', 40a) und/oder die Spannzangen (46) hydraulisch wirkend ausgebildet sind, wobei die druckerzeugende Hydraulikpumpe direkt am oder im Spannelement (40, 40', 40a) oder an oder in der Spannzange (46) vorgesehen ist, insbesondere wobei an oder in dem Spannelement (40, 40', 40a) eine Hydraulikpumpe vorgesehen ist, die unabhängig von einem zentralen Hydraulikaggregat wirkt und die direkt am oder in dem Spannelement (40, 40', 40a) den notwendigen Anpressdruck erzeugt oder eine Spannkraftkontrolle vorgesehen ist, mittels derer das exakte Spannen des Werkstücks überwacht wird.

8. Bearbeitungsmaschine nach einem der vorhergehenden Ansprüche, **dadurch gekennzeichnet, dass** wenigstens eines der Spannelemente (40, 40', 40a) zur Aufnahme zumindest eines Bearbeitungswerkzeuges ausgebildet ist.

9. Bearbeitungsmaschine nach einem der vorhergehenden Ansprüche, **dadurch gekennzeichnet, dass** eine Nullpunktspanneinrichtung zur exakten Positionierung bzw. Ausrichtung des Werkstückes (2) an oder auf der Bearbeitungsfläche vorgesehen ist.

10. Bearbeitungsmaschine nach einem der vorhergehenden Ansprüche, **dadurch gekennzeichnet, dass** an dem Spannmittel (40, 40', 40a) oder in dessen unmittelbarer Nähe und/oder auf der Bearbeitungsfläche oder der Spannfläche wenigstens eine Referenzfläche (7) vorgesehen ist, um die exakte Positionierung des Werkstückes (2) bzw. einer werkstücktragende Palette zu bestimmen und zu prüfen.

11. Bearbeitungsmaschine nach einem der vorhergehenden Ansprüche, **dadurch gekennzeichnet, dass** an dem Werkstück (2) oder an der Spannfläche wenigstens ein Spannnippel (8) vorgesehen ist, der der Positionierung und dem Aufspannen des Werkstückes (2) auf der Spannfläche dient.

12. Bearbeitungsmaschine nach Anspruch 11, **dadurch gekennzeichnet, dass** an oder in dem Spannnippel (8) wenigstens ein Identifizierungsmittel, wie zum Beispiel ein Datenträger (9), Transponder oder Barcode vorgesehen ist, der Werkstückinformationen und Werkstückbearbeitungsinformationen aufweist.

13. Bearbeitungsmaschine nach Anspruch 12, **dadurch gekennzeichnet, dass** der Datenträger (9) zusätzlich oder alternativ, zum Beispiel mit einem separaten Befestigungsmittel an dem Spannnippel (8) angeordnet ist.

14. Bearbeitungsmaschine nach einem der vorhergehenden Ansprüche, **dadurch gekennzeichnet, dass** in dem Synchronmotor eine geberlose Rotorlagebestimmung, insbesondere eine geberlose Stillstandslageerkennung vorgesehen ist.

15. Bearbeitungsmaschine nach Anspruch 14, **dadurch gekennzeichnet, dass** die Rotorlagebestimmung und die Stillstandslageerkennung software- oder NC-gesteuert durchführbar ist.

## Claims

1. Machining unit (1) for the processing of at least one workpiece (2), wherein the workpiece (2) is held within the machining unit (1) directly or indirectly by a clamping device (4) on or at a workpiece table (3) which is either stationary or able to turn around at least one axis, wherein the clamping device (4) comprises at least one clamping element (40, 40', 40a) which directly interacts with the workpiece (2) and wherein the clamping device (4) is clamped on the workpiece table (3) by means of a support plate (42), and an electric motor (5) is provided for generating the clamping force in order to directly operate the clamping element (40, 40',40a) and the electric motor (5) drives directly the clamping element (40, 40',40a) and the electric motor (5) also drives as a central drive several clamping elements (40, 40', 40a) through at least one power transmission means (53) whereas a drive shaft (50) driven be the electric motor (5) uses an adapter connector (51) in order to link the drive shaft (50) alternatively with at least one power transmission means (53) for the clamping element(s) (40, 40' , 40a) or, in order to link the drive shaft (50) with a lathe chuck or a jaw chuck (6) for a direct or indirect reception of the workpiece (2) for a rotational grinding or processing of the workpiece (2), **characterized in that** the electric motor (5) is configured as a sensorless synchronous motor and this synchronous motor is built as a permanent magnet synchronous motor (PMSM).

2. Machining unit (1) according to claim 1, **characterized in that** each of the clamping elements (40, 40',40a) uses an individual electric motor (5) as a drive to generate the clamping force, whereas the power transmission means (53) is a toothed belt, a chain, a gear or a similar transmission system.

3. Machining unit (1) according to one of the preceding claims, **characterized in that** the electric motor (5) is monitored by the control system of the machine tool (1) as a NC axis, wherein the control system by means of these data measures or obtains the exact position of the clamping element (40, 40', 40a) or the control system derives by means of the measured data, or by means of the measured torque the force used or applied by the clamping element (s) (40, 40' , 40a) .

4. Machining unit (1) according to one of the preceding claims, **characterized in that** the electric motor (5) is provided on a motor shaft connector (52) at the clamping device (4) or at the clamping element (40, 40', 40a) on the same axis of symmetry or parallel to this axis at an angle and preferably a right angle to this axis of symmetry or to the clamping element (40, 40',40a).

5. Machining unit (1) according to one of the preceding claims, **characterized in that** the clamping element (40, 40',40a) possesses a freewheeling gear, a clutch configured as a slipping clutch allowing to limit the transmitted force or **in that** at least a clamping claw (41, 41') is foreseen at the clamping element (40, 40', 40a) allowing to clamp the workpiece (2), whereas a pressure generating element (49) like a compression spring (49) or a set of springs is situated at or in the clamping element (40, 40',40a) and pushes and moves the clamping claw (41, 41') in the clamping position when it is in a decoupled state while, in a coupled state, the electric motor (5) moves the clamping claw (41, 41') in its initial or idle position or **in that** a tension element like a tension spring (48) is foreseen at or in the clamping element (40, 40',40a) moving the clamping claw (41, 41') in a decoupled or not clamped state in its initial position, whereas the clamping claw (41, 41') has a nose like clamping protrusion (41a) which in clamping direction is oriented with an angle of 1° to 5° and preferably 2° from a parallel plane to the clamping plane and/or **in that** the clamping claw (41, 41') can be moved in an essentially perpendicular direction to the clamping plane.

6. Machining unit (1) according to one of the preceding claims, **characterized in that** the clamping element (40a) is configured as a collet chuck (46) or **in that** the clamping element (40a) is a truncated cone having a reception aperture (40b) in which a bolt (21) and in particular a bolt (21) configured with a bolt head (22) is introduced for the clamping and being located at a pallet (2a) supporting the workpiece or directly at the workpiece (2) to be processed, whereas the reception aperture (40b) is enclosed by the collet chuck (46) and wherein, in clamped state, the clamp jaws (47) press on the bolt (21) and the power transmission means (53') driven by the electric motor (5) operates the collet chuck.

7. Machining unit (1) according to one of the preceding claims, **characterized in that** the clamping elements (40, 40', 40a) and/or the collet chuck (46) is hydraulically driven with a hydraulic pump generating the pressure and sitting directly at or in the clamping element (40, 40', 40a) or at or in the collet chuck (46), and in particular with a hydraulic pump sitting in the clamping element (40, 40', 40a) which is driven independently from a central hydraulic system so that it generates directly at or in the clamping element (40, 40', 40a) the required contact pressure or **in that** a clamping force control system is foreseen controlling the precise clamping movement of the workpiece.

8. Machining unit (1) according to one of the preceding claims, **characterized in that** at least one of the clamping elements (40, 40', 40a) is configured to receive at least one machining tool.

9. Machining unit (1) according to one of the preceding claims, **characterized in that** a zero position clamping system is provided to exactly position and adjust the workpiece (2) at or on the machining surface.

10. Machining unit (1) according to one of the preceding claims, **characterized in that** at least one reference surface (7) is provided at the clamping means (40, 40', 40a) or in its close proximity and/or on the machining surface in order to exactly adjust or verify the position of the workpiece (2) or of the pallet holding a workpiece.

11. Machining unit (1) according to one of the preceding claims, **characterized in that** at least one clamping nipple (8) is provided at the workpiece (2) or at the clamping surface in order to position and to clamp the workpiece (2) on the clamping surface.

12. Machining unit (1) according claim 11, **characterized in that** at least one identification means like a data carrier (9), a transponder or a barcode containing information about the workpiece or about the workpiece processing is provided at or in the clamping nipple (8)

13. Machining unit (1) according to claim 12, **characterized in that** the data carrier (9) is held by a supplemental or an alternative means, for example by a separate fastening means at the clamping nipple (8).

14. Machining unit according to one of the preceding claims, **characterized in that** within the synchronous motor exists a sensorless rotor position detection and in particular a sensorless standstill detection.

15. Machining unit according to claim 14, **characterized in that** the rotor position detection and the standstill detection can be executed per software or by a NC controller.

## Revendications

1. Machine de traitement (1) destinée à usiner au moins une pièce à usiner (2) de façon à ce que cette pièce à usiner (2) soit maintenue directement ou indirectement par un dispositif de serrage (4) dans la machine d'usinage (1) sur, ou au niveau, d'une table d'usinage (3) immobile ou mobile autour d'au moins un axe et à ce que ce dispositif de serrage (4) comporte au moins un élément de serrage (40, 40', 40a) interagissant directement avec la pièce à usiner (2) et à ce que le dispositif de serrage (4) est fixé sur la table d'usinage (3) via une plaque de support (42) et un moteur électrique(5) prévu pour la génération de la force de serrage, interagissant avec l'élément de serrage (40, 40', 40a) et commandant directement l'élément de serrage (40, 40', 40a) et à ce que le moteur électrique (5) commande en tant que force centrale plusieurs éléments de serrage (40, 40', 40a) via au moins un moyen de transmission de force (53) et en ce qu'un raccord adaptateur (51) existe sur l'arbre de transmission (50) du moteur permettant de connecter l'arbre de transmission du moteur (50) via au moins un des moyens de transmission de force (53) à l'un ou plusieurs des élément(s) de serrage (40, 40', 40a) ou alternativement de connecter l'arbre de transmission (50) du moteur au mandrin rotatif ou au mandrin à mâchoires (6) servant à réceptionner directement ou indirectement la pièce à usiner(2) pour un usinage abrasif rotationnel ou pour un tournage de la pièce à usiner (2), **caractérisée en ce que** le moteur électrique est un moteur synchrone sans codeur et **en ce que** ce moteur synchrone est configuré comme un moteur synchrone à aimant permanent (MSAP).

2. Machine de traitement selon la revendication 1, **caractérisée en ce qu'**un moteur électrique (5) est prévu pour chacun des éléments de serrage (40, 40', 40a) comme moyen de commande et de génération de la force de serrage en utilisant comme moyen de transmission de force (53) une courroie dentelée, une chaine, un engrenage ou un dispositif semblable.

3. Machine de traitement selon une des revendications précédentes, **caractérisée en ce que** le moteur électrique (5) est surveillé par un système de contrôle de la machine d'usinage (1) en tant qu'axe NC de façon à ce que le système de contrôle saisit et dérive la position exacte de l'élément de serrage (40, 40', 40a) de ces données ou **en ce que** le système de contrôle calcule la force exercée ou la force d'appui du ou des élément(s) de serrage (40 ,40', 40a) à partir des données saisies et du couple mécanique mesuré.

4. Machine de traitement selon une des revendications précédentes, **caractérisée en ce que** le moteur électrique (5) est connecté via un raccord d'arbre de moteur (52) au dispositif de serrage (4) ou à l'élément de serrage (40, 40', 40a) sur le même axe de symétrie ou parallèle à cet axe ou **en ce que** le moteur électrique (5) est orienté de façon à former un angle et de préférence un angle droit par rapport à l'axe de symétrie du dispositif de serrage (4) ou de l'élément de serrage (40, 40', 40a).

5. Machine de traitement selon une des revendications précédentes, **caractérisée en ce que** l'élément de serrage (40, 40', 40a) possède une roue libre, un embrayage configuré comme un embrayage à friction afin de limiter la force à transmettre ou **en ce qu'**au moins une griffe de serrage (41, 41') est prévue au niveau de l'élément de serrage (40, 40', 40a) servant à serrer la pièce à usiner (2) et **en ce qu'**un élément (49) générant de la pression, tel un ressort de compression ou un ensemble de ressorts est prévu sur ou dans l'élément de serrage (40, 40', 40a) permettant, dans un état découplé, de pousser ou de déplacer la griffe de serrage (41, 41') vers une position de serrage, et dans un état couplé, au moteur électrique (5) de déplacer la griffe de serrage (41, 41') vers sa position de départ ou position de repos, ou **en ce qu'**il existe un élément de rappel, tel un ressort de traction (48) permettant, dans un état découplé, détendu; de déplacer la griffe de serrage (41, 41') vers une position de départ, et **en ce que** la griffe de serrage (41, 41') possède un prolongement (41a) en forme d'ergot, incliné dans la direction de serrage vers le plan de serrage d'un angle d'inclinaison allant de 1° à 5° et de préférence 2° par rapport à un plan parallèle au plan de serrage et/ou ne ce que la griffe de serrage (41, 41a) peut être déplacée essentiellement à angle droit par rapport au plan de serrage.

6. Machine de traitement selon une des revendications précédentes, **caractérisée en ce que** l'élément de serrage (40a) est configuré comme une pince de serrage (46) ou **en ce que** l'élément de serrage (40a) est tronconique et possède une ouverture de réception (40b) permettant le serrage en y introduisant un tenon (21) fixé sur une palette (2a) supportant une pièce à usiner ou directement sur la pièce à usiner (2), le tenon ayant en particulier une tête (22) et l'ouverture de réception (40b) est renfermée par la pince de serrage (46), les crampons de serrage (47) en état serré appuient contre ou sur le tenon (21) et le moyen de transmission de force (53') entrainé par le moteur électrique (5) agit sur la pince de serrage (46).

7. Machine de traitement selon une des revendications précédentes, **caractérisée en ce que** les éléments de serrage (40, 40', 40a) et/ou les pinces de serrage (46) agissent sous une pression hydraulique générée par une pompe hydraulique située directement sur ou dans l'élément de serrage (40, 40', 40a) ou sur ou dans la pince de serrage (46) et en particulier **en ce qu'**une pompe hydraulique située sur ou dans l'élément de serrage (40, 40', 40a), indépendante d'un système hydraulique central génère directement sur ou dans l'élément de serrage (40, 40', 40a) la pression d'appui nécessaire ou **en ce qu'**un système de contrôle de la force de serrage est prévu permettant de surveiller le serrage exact de la pièce à usiner.

8. Machine de traitement selon une des revendications précédentes, **caractérisée en ce qu'**au moins un des éléments de serrage (40, 40', 40a) est configuré pour recevoir au moins un outil d'usinage.

9. Machine de traitement selon une des revendications précédentes, **caractérisée en ce qu'**un système de serrage point zéro est prévu au niveau de la surface d'usinage permettant d'ajuster et de positionner exactement la pièce à usiner (2).

10. Machine de traitement selon une des revendications précédentes, **caractérisée en ce qu'**au moins une surface de référence (7) est prévue au niveau du moyen de serrage (40, 40', 40a) ou dans son environnement proche et/ou sur la surface d'usinage ou sur la surface de serrage afin de déterminer et de vérifier le positionnement exact de la pièce à usiner (2) ou d'une palette supportant une pièce à usiner.

11. Machine de traitement selon une des revendications précédentes, **caractérisée en ce qu'**au moins une tirette de serrage (8) existe au niveau de la pièce à usiner (2) ou au niveau de la surface de serrage servant au positionnement et au serrage de la pièce à usiner (2) sur la surface de serrage.

12. Machine de traitement selon la revendication 11, **caractérisée**
**en ce qu'**il existe sur ou dans la tirette de serrage (8) au moins un moyen d'identification tel un support de données (9), un transpondeur ou un code-barres, contenant des informations sur la pièce à usiner ou sur le procédé d'usinage de la pièce à usiner.

13. Machine de traitement selon la revendication 12, **caractérisée**
**en ce que** le support de données (9) est fixé par un moyen de fixation alternatif ou supplémentaire, par exemple par un moyen séparé fixé sur la tirette de serrage (8).

14. Machine de traitement selon une des revendications précédentes, **caractérisée en ce qu'**un détecteur de la position du rotor sans codeur et de préférence un détecteur d'arrêt du rotor sans codeur est prévu à l'intérieur du moteur synchrone.

15. Machine de traitement selon la revendication 14, **caractérisée**
**en ce que** la détermination de la position du rotor et la détection d'arrêt du rotor peuvent être contrôlées par logiciel ou par NC.
